# DEMANDE DE BREVET EUROPEEN

(11) **EP 4 190 649 A1**
(43) Date de publication de la demande: **07.06.2023**
(21) Numéro de dépôt: 22209431.0
(22) Date de dépôt: 24.11.2022
(51) Int. Cl.: B60T 7/06, G05G 1/46

(54) **PÉDALE DE FREIN DÉCLINABLE EN DEUX VERSIONS**

(30) Priorité: 03.12.2021 FR 2112919
(71) Demandeur: Renault s.a.s, 92100 Boulogne Billancourt (FR)
(72) Inventeur: BOITEANU, Florin, 062203 BUCAREST (RO); ZGAJNAR, Patrick, 78280 GUYANCOURT (FR)

(57) **Abrégé**

L'invention concerne une pédale de frein (1) comprenant un bras (2) allongé dont une première extrémité (3) se termine par un patin d'actionnement (4) et dont une deuxième extrémité (5) comprend un orifice (6) destiné au passage d'un axe de rotation, ledit bras (2) comportant en outre une ouverture (14) destinée à coopérer avec une tige relai d'un servofrein.

Selon l'invention, le bras (2) comprend un trou (8) dont la section transversale est allongée, et un insert (9) de forme allongée et doté de l'ouverture (14) est placé dans ledit trou (8) sans introduire de jeu avec celui-ci, ledit insert (9) ne pouvant occuper alternativement que deux positions dans ledit trou (8), une première position correspondant à une première position de l'ouverture (14), et une deuxième position correspondant à une deuxième position de l'ouverture (14), de sorte que la première position et la deuxième position de l'ouverture (14) soient différentes l'une de l'autre.

## Description

La présente invention concerne une pédale de frein déclinable en deux versions. Schématiquement, une pédale de frein comprend un bras allongé dont une première extrémité se termine par un patin d'actionnement et dont une deuxième extrémité présente un orifice traversant, destiné au passage d'un axe de rotation. La première extrémité et la deuxième extrémité sont à considérer par rapport à un axe longitudinal dudit bras. De plus, le bras comprend une ouverture placée entre le patin d'actionnement et l'orifice destiné au passage de l'axe de rotation, et destinée à coopérer avec une tige relai d'un servofrein. Cette ouverture est placée à une distance « d » de l'orifice et à une distance « D » du patin d'actionnement, la distance « D » étant généralement supérieure à la distance « d ». Une pression du pied sur le patin d'actionnement entraine une mise en rotation du bras de la pédale de frein autour de l'axe de rotation, et un déplacement simultané de la tige relai destiné à actionner le servofrein pour assurer une phase de freinage du véhicule.

Actuellement, certains véhicules se déclinent en plusieurs versions, dont généralement une version à moteur thermique pouvant être à essence ou diesel, et une version à moteur électrique. A chacune de ces versions, est associé un cahier des charges concernant le rapport de démultiplication nécessaire au freinage du véhicule, ledit rapport de démultiplication étant différent d'une version à l'autre. Ce rapport de démultiplication étant directement lié à la position de l'ouverture sur le bras de la pédale de frein, il est donc nécessaire de fabriquer une pédale de frein spécifique pour chaque version du véhicule, chacune desdites pédales se distinguant l'une de l'autre par la position de ladite ouverture. Or, la fabrication de deux pédales de frein spécifiques pour les deux versions d'un même véhicule, est contraignante car elle nécessite beaucoup de temps, et engendrent des coûts de fabrication plus élevés que dans le cas de la fabrication d'une seule pédale de frein.

Une pédale de frein selon l'invention est conçue de manière à pouvoir s'adapter à l'une ou l'autre des versions d'un même véhicule.

L'invention a pour objet une pédale de frein comprenant un bras allongé dont une première extrémité se termine par un patin d'actionnement et dont une deuxième extrémité comprend un orifice destiné au passage d'un axe de rotation, ledit bras comportant en outre une ouverture destinée à coopérer avec une tige relai d'un servofrein.

Selon l'invention, le bras comprend un trou dont la section transversale est allongée et un insert de forme allongée et doté de l'ouverture est placé dans ledit trou sans introduire de jeu avec celui-ci, ledit insert ne pouvant occuper alternativement que deux positions dans ledit trou, une première position correspondant à une première position de l'ouverture, et une deuxième position correspondant à une deuxième position de l'ouverture, de sorte que la première position et la deuxième position de l'ouverture soient différentes l'une de l'autre. De cette manière, dans le cas où un véhicule se décline en deux versions différentes, plutôt que de fabriquer deux pédales de frein distinctes correspondant à chacune de ces deux versions et se différentiant l'une de l'autre uniquement par la position de l'ouverture sur le bras, il suffit de fabriquer une seule pédale de frein conforme à l'invention, et d'y placer l'insert dans la bonne position. En effet, ledit insert ne peut venir se loger dans le trou que dans deux positions différentes, plaçant l'ouverture dans deux positions distinctes correspondant chacune à une version du véhicule. De cette manière, il n'est plus nécessaire de fabriquer deux pédales différentes pour chacune des deux versions du véhicule. Le fait que l'insert vienne se loger dans le trou sans créer de jeu avec ledit trou, signifie que ledit insert est en contact sur toute sa périphérie avec une paroi du bras de la pédale de frein délimitant le trou. L'insert vient donc s'emboiter idéalement dans le trou, sans possibilité de mouvement relativement audit trou. Autrement dit, l'insert est placé dans le trou avec une grande stabilité. Le trou peut indifféremment avoir une forme rectangulaire, parallélépipédique ou elliptique. Le trou est préférentiellement traversant. Avantageusement, la longueur de l'insert est inférieure à 5cm, et de façon plus avantageuse est inférieure à 3cm. Préférentiellement, le centre de l'ouverture dans la première position et le centre de l'ouverture dans la deuxième position sont distants l'un de l'autre d'au maximum 2cm, et de façon plus avantageuse d'au maximum 1cm. Une fois que l'insert a été placé dans le trou, il est arrimé à la pédale de frein sans possibilité d'être éjecté de celle-ci à la moindre sollicitation. De cette manière et uniquement à titre d'exemple, il peut être rentré à force dans ledit trou, ou être clipsé au bras de la pédale ou être collé à celui-ci.

Selon une caractéristique possible de l'invention, l'ouverture est excentrée le long d'un axe longitudinal de l'insert, la première position de l'insert et la deuxième position de l'insert se déduisant l'une de l'autre par une rotation de 180° de l'insert. De cette manière, dans la première position l'ouverture se retrouve placée à une extrémité du trou et dans la deuxième position l'ouverture se retrouve placée à une autre extrémité dudit trou, lesdites deux extrémités devant être considérées le long d'un axe longitudinal du trou.

Selon une caractéristique possible de l'invention, le trou dans le bras de la pédale de frein et l'insert ont chacun une section transversale de forme oblongue. De cette manière, l'insert peut être facilement introduit dans le trou, sans avoir recours à une grande précision de positionnement dudit insert par rapport audit trou.

Selon une caractéristique possible de l'invention, l'insert est délimité par deux côtés rectilignes parallèles et par deux côtés arrondis reliant lesdits deux côtés rectilignes, l'ouverture tangentant l'un des deux côtés arrondis. Ainsi, l'ouverture est repoussée à une extrémité de l'insert allongé du côté d'un segment arrondi, de sorte que l'ouverture soit délimitée du côté dudit côté arrondi par un segment arrondi de faible épaisseur. Le terme « tangenter » ne signifie pas que l'ouverture débouche à une extrémité de l'insert en ayant un contour ouvert. L'ouverture conserve bien un contour fermé dans l'insert.

Selon une caractéristique possible de l'invention, l'ouverture est traversante. Autrement dit, un axe de rotation peut traverser de part en part ladite ouverture. Selon une caractéristique possible de l'invention, l'ouverture dans l'insert est cylindrique.

Selon une caractéristique possible de l'invention, la pédale de frein est réalisée dans un matériau comprenant de l'aluminium. En étant réalisée avec un tel matériau, elle contribue ainsi à alléger la masse du véhicule, tout en conservant une bonne tenue mécanique. Préférentiellement, le matériau n'est constitué que d'aluminium.

Selon une caractéristique possible de l'invention, la pédale de frein est composée de nervures définissant une structure en nids d'abeille. Avec une telle géométrie, la pédale contribue un peu plus à alléger le véhicule, tout en conservant toujours une bonne tenue mécanique.

Selon une caractéristique possible de l'invention, l'insert est métallique. Préférentiellement, l'insert est réalisé dans un métal dur, ayant une bonne tenue mécanique. De façon avantageuse, le métal de l'insert n'est pas de l'aluminium. L'invention a pour autre objet un véhicule comprenant un servofrein.

Selon l'invention, le véhicule comprend une pédale de frein conforme à l'invention, de sorte qu'une tige relai du servofrein coopère avec l'ouverture de l'insert placé dans le bras de la pédale de frein, soit dans la première position, soit dans la deuxième position.

Une pédale de frein selon l'invention présente l'avantage de pouvoir se décliner en deux versions différentes pour pouvoir d'adapter à deux versions différentes d'un même véhicule, grâce à un ajout judicieux d'un insert de géométrie simple dans un trou de ladite pédale pouvant occuper deux positions distinctes. Il en résulte qu'il n'est plus nécessaire de fabriquer deux pédales de frein différentes, adaptées chacune à une version dudit véhicule. Elle a de plus l'avantage de pouvoir passer d'une version à l'autre de façon simple et rapide, sans avoir recours à un outillage particulier ou à des manipulations longues et contraignantes.

On donne ci-après une description détaillée d'un mode de réalisation préféré d'une pédale de frein selon l'invention, en se référant aux figures suivantes.
[Fig.1] La figure 1 est une vue en perspective d'une pédale de frein selon l'invention,
[Fig.2] La figure 2 est une vue en perspective d'un insert destiné à venir se placer dans un trou du bras d'une pédale de frein selon l'invention,
[Fig.3] La figure 3 est une vue en perspective d'une zone du bras d'une pédale de frein selon l'invention comprenant l'insert de la figure 2 dans une première position,
[Fig.4] La figure 4 est une vue en perspective de la zone de la figure 3, l'insert de la figure 2 étant dans une deuxième position,

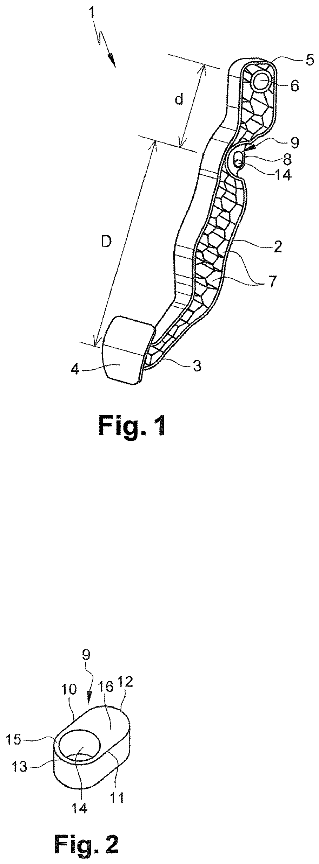

En se référant à la figure 1, une pédale de frein 1 selon l'invention comprend un bras 2 allongé, dont une première extrémité 3 se termine par un patin d'actionnement 4 et dont une deuxième extrémité 5 présente un orifice traversant 6, destiné au passage d'un axe de rotation (non visible sur la figure). La première extrémité 3 et la deuxième extrémité 5 sont à considérer par rapport à un axe longitudinal dudit bras 2. Le bras 2 est préférentiellement réalisé en aluminium et possède des nervures 7 définissant une structure en nids d'abeille.

Sur les pédales de frein existantes, le bras 2 comprend une ouverture placée entre le patin d'actionnement 4 et l'orifice 6 destiné au passage de l'axe de rotation, ladite ouverture étant destinée à coopérer avec une tige relai d'un servofrein. Cette ouverture est placée à une distance « d » de l'orifice 5 et à une distance « D » du patin d'actionnement 3, la distance « D » étant généralement supérieure à la distance « d ». Une pression exercée avec le pied sur le patin d'actionnement 4 va engendrer un pivotement vers l'avant du bras 2 de la pédale de frein 1 autour de l'axe de rotation passant par l'orifice 6 de la deuxième extrémité 4. Ce pivotement vers l'avant induit un déplacement de la tige relai, qui va alors activer le servofrein pour obtenir un freinage du véhicule.

Actuellement, certains véhicules se déclinent en plusieurs versions, dont généralement une version à moteur thermique pouvant être à essence ou diesel, et une version à moteur électrique. A chacune de ces versions, est associé un cahier des charges concernant le rapport de démultiplication nécessaire au freinage du véhicule, ledit rapport de démultiplication étant différent d'une version à l'autre. Ce rapport de démultiplication étant directement lié à la position de l'ouverture sur le bras 2 de la pédale de frein 1, il est donc nécessaire de fabriquer une pédale de frein 1 spécifique pour chaque version du véhicule, chacune desdites pédales se distinguant l'une de l'autre par la position de ladite ouverture sur la pédale de frein 1. Or, la fabrication de deux pédales de frein est contraignante par car elle engendre un temps de fabrication long et donc des coûts supplémentaires.

Afin de s'affranchir de la fabrication de deux pédales de frein distinctes correspondant aux deux versions du véhicule, l'invention a pour objet une pédale de frein 1 qui peut directement se décliner en deux versions, chacune étant adaptée à une version du véhicule.

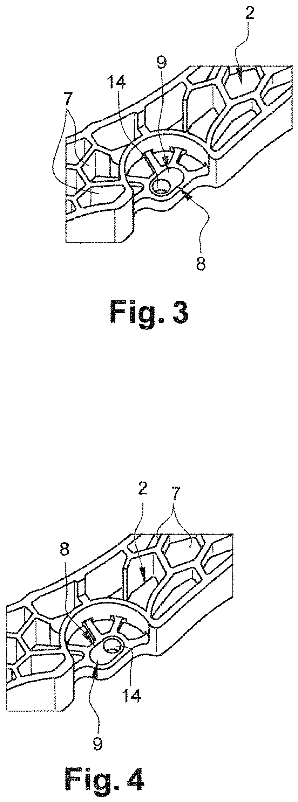

Pour ce faire, en se référant aux figures 3 et 4, le bras 2 de la pédale de frein 1 possède un trou traversant 8, dont la section transversale est de forme oblongue. Cette section transversale est ainsi délimitée par deux bords rectilignes parallèles et par deux bords arrondis joignant les extrémités de ces deux bords rectilignes parallèles.

En se référant à la figure 2, un insert métallique 9 ayant une section transversale de forme oblongue est destiné à venir se placer dans le trou 8 du bras 2 de la pédale 1. La section transversale de l'insert 9 est ainsi délimitée par deux bords rectilignes 10, 11 parallèles et par deux bords arrondis 12, 13 joignant les extrémités de ces deux bords rectilignes parallèles 10, 11. Ces bords arrondis 12, 13 sont en arc de cercle, et forment chacun préférentiellement un demi-cercle. La section transversale de cet insert métallique 9 est définie par un grand axe joignant les sommets des deux bords arrondis 12, 13, et par un petit axe joignant le milieu de chacun desdits deux bords rectilignes 10, 11, le petit axe et le grand axe étant perpendiculaires. Cet insert métallique 9 présente une certaine largeur, qui est sa dimension considérée le long d'un axe perpendiculaire à la section transversale. Une ouverture cylindrique 14 et traversante est ménagée dans l'insert métallique 9, de sorte que son axe de révolution s'étende suivant la largeur dudit insert métallique 9. Cette ouverture cylindrique 14 est décalée le long du grand axe de la section transversale, par rapport à une position centrale sur celui-ci, de manière à être proche de l'un des deux bords arrondis 12, 13 et éloigné de l'autre bord arrondi 12, 13. De cette façon, l'ouverture cylindrique 14 est bordée du côté du segment arrondi 10, 11 dont elle est le plus proche, par un segment arrondi 15 de faible épaisseur.

En se référant aux figures 3 et 4, les dimensions de l'insert métallique 9 sont légèrement inférieures à celles du trou 8 du bras 2 de la pédale de frein 1, de sorte que ledit insert métallique 9 puisse occuper ledit trou 8 sans créer de jeu avec celui-ci. De cette manière, une fois que l'insert métallique 9 a été placé dans le trou 8, la totalité de son bord périphérie est en contact avec une paroi du bras 2 de la pédale de frein 1 délimitant ledit trou 8, et il n'a donc plus aucune possibilité de mouvement par rapport à ce trou 8. Il se retrouve ainsi dans une position stable à l'intérieur de celui-ci.

En se référant à la figure 3, l'insert métallique 9 peut ainsi être placé dans une première position dans le trou 8 oblong du bras 2 de la pédale de frein 1, correspondant à une première position de l'ouverture cylindrique 14 de l'insert métallique 9.

En se référant à la figure 4, l'insert métallique 9 peut également être placé dans une deuxième position dans le trou 8 oblong du bras 2 de la pédale de frein 1, correspondant à une deuxième position de l'ouverture cylindrique 14 de l'insert métallique 9. La deuxième position de l'insert métallique 9 dans le trou 8 oblong se déduit de la première position dudit insert 9 dans ledit trou 8, au moyen d'une une rotation de 180° autour d'un axe central de cet insert 9 s'étendant le long d'un axe matérialisant la largeur de celui-ci.

Sur les exemples des figures 3 et 4, dans la première position, l'ouverture cylindrique 14 est plus proche du patin d'actionnement 4 que ne l'est l'ouverture 14 dans la deuxième position.

Il est à noter que l'insert métallique 9 ne peut occuper que deux positions distinctes dans le trou oblong 8 du bras 2 de la pédale 1 de frein.

Une pédale de frein 1 selon l'invention peut se décliner en plus de deux versions, en plaçant dans le trou 8 du bras 2 de la pédale de frein 1 un insert 9 ayant les mêmes dimensions externes, mais comportant une ouverture 14 plus ou moins excentrée le long du grand axe de l'insert 9.

## Revendications

1. Pédale de frein (1) comprenant un bras (2) allongé dont une première extrémité (3) se termine par un patin d'actionnement (4) et dont une deuxième extrémité (5) comprend un orifice (6) destiné au passage d'un axe de rotation, ledit bras (2) comportant en outre une ouverture (14) destinée à coopérer avec une tige relai d'un servofrein, **caractérisée en ce que** le bras (2) comprend un trou (8) dont la section transversale est allongée, et **en ce qu'**un insert (9) de forme allongée et doté de l'ouverture (14) est placé dans ledit trou (8) sans introduire de jeu avec celui-ci, ledit insert (9) ne pouvant occuper alternativement que deux positions dans ledit trou (8), une première position correspondant à une première position de l'ouverture (14), et une deuxième position correspondant à une deuxième position de l'ouverture (14), de sorte que la première position et la deuxième position de l'ouverture (14) soient différentes l'une de l'autre.

2. Pédale de frein selon la revendication 1, **caractérisée en ce que** l'ouverture (14) est excentrée le long d'un axe longitudinal de l'insert (9), et **en ce que** la première position de l'insert (9) et la deuxième position de l'insert (9) se déduisent l'une de l'autre par une rotation de 180° de l'insert (9).

3. Pédale de frein selon l'une quelconque des revendications 1 ou 2, **caractérisée en ce que** le trou (8) dans le bras (2) de la pédale de frein (1) et l'insert (9) ont chacun une section transversale de forme oblongue.

4. Pédale de frein selon la revendication 3, **caractérisée en ce que** l'insert (9) est délimité par deux côtés rectilignes (10, 11) parallèles et par deux côtés arrondis (12, 13) reliant lesdits deux côtés rectilignes (10, 11), et **en ce que** l'ouverture (14) tangente l'un des deux côtés arrondis.

5. Pédale de frein selon l'une quelconque des revendications 1 à 4, **caractérisée en ce que** l'ouverture (14) dans l'insert (9) est traversante.

6. Pédale de frein selon l'une quelconque des revendications 1 à 5, **caractérisée en ce que** l'ouverture (14) dans l'insert (9) est cylindrique.

7. Pédale de frein selon l'une quelconque des revendications 1 à 6, **caractérisée en ce qu'**elle est réalisée dans un matériau comprenant de l'aluminium.

8. Pédale de frein selon la revendication 7, **caractérisée en ce qu'**elle composée de nervures (7) définissant une structure en nids d'abeille.

9. Pédale de frein selon l'une quelconque des revendications 7 ou 8, **caractérisée en ce que** l'insert (9) est métallique.

10. Véhicule comprenant un servofrein, **caractérisé en ce qu'**il comprend une pédale de frein (1) conforme à l'une quelconque des revendications 1 à 9, de sorte qu'une tige relai du servofrein coopère avec l'ouverture (14) de l'insert (9) placé dans le bras (2) de la pédale de frein (1), soit dans la première position, soit dans la deuxième position.
